Europäisches Patentamt

European Patent Office

Office européen des brevets

(19)

(11) **EP 0 967 176 B1**

(12) **FASCICULE DE BREVET EUROPEEN**

(45) Date de publication et mention
de la délivrance du brevet:
**16.04.2003 Bulletin 2003/16**

(51) Int Cl.⁷: **C01B 31/14**, B01J 20/20,
B01J 20/28

(21) Numéro de dépôt: **99401402.5**

(22) Date de dépôt: **10.06.1999**

(54) **Agglomerats à base de charbon actif, leur procédé de préparation et leur utilisation comme agents d'adsorption**

Agglomerate auf der Basis von Aktivkohle, Verfahren zu deren Herstellung und deren Verwendung als Adsorptionsmittel

Active carbon-based agglomerates, process for their preparation and use thereof as adsorbents

(84) Etats contractants désignés:
**AT BE CH DE DK ES FR GB GR IE IT LI LU NL SE**

(30) Priorité: **23.06.1998 FR 9807910**

(43) Date de publication de la demande:
**29.12.1999 Bulletin 1999/52**

(73) Titulaire: **CECA S.A.**
**92800 Puteaux (FR)**

(72) Inventeur: **Reymonet, Jean-Louis**
**75019 Paris (FR)**

(74) Mandataire: **Treuil, Claude et al**
**Atofina**
**Département Propriété Industrielle**
**4-8 cours Michelet**
**La Défense 10**
**92091 Paris La Défense Cedex (FR)**

(56) Documents cités:
EP-A- 0 278 061        EP-A- 0 379 378
DE-A- 1 567 491        FR-A- 1 397 950
FR-A- 2 103 348        FR-A- 2 215 461
FR-A- 2 219 114        GB-A- 1 420 479
US-A- 4 051 098        US-A- 5 731 260

• **PATENT ABSTRACTS OF JAPAN vol. 097, no. 010, 31 octobre 1997 (1997-10-31) & JP 09 156914 A (KYOCERA CORP), 17 juin 1997 (1997-06-17)**

**Description**

L'invention concerne le domaine des charbons actifs et plus particulièrement des charbons actifs agglomérés avec un liant.

Les charbons actifs sont des produits résultant de la carbonisation de matières carbonées diverses, bois, houille, polymères, ayant subi un traitement d'activation qui leur confère une forte porosité et un grand pouvoir adsorbant. Ces propriétés adsorbantes ont été exploitées depuis longtemps pour le traitement, la séparation ou l'épuration de gaz ainsi que pour la décoloration, l'épuration et la désodorisation de liquides.

Lorsqu'ils sont mis en contact avec des liquides dans des procédés discontinus, ils sont le plus souvent utilisés sous forme de poudres, de granulométrie moyenne en général inférieure à 100 µm car les poudres permettent de réaliser un contact intime charbon actif/liquide très efficace. Dans les procédés de traitement par percolation, le charbon actif est plutôt utilisé sous forme de bûchettes ou de granulés pour éviter tout mouvement intempestif de la couche d'adsorbant.

Lorsque le charbon actif est mis en contact avec des gaz (lits d'adsorbant), on évite les granulométries trop fines dont la perte de charge est trop élevée et qui augmentent les risques de colmatage des appareillages.

On peut aussi préparer le charbon actif par action d'un agent déshydratant et/ou oxydant (acide phosphorique, chlorure de zinc) sur des matériaux ligneux tels que bois, coques de noix de coco, houille) en opérant sans carbonisation préalable à une température relativement basse (inférieure à 600 °C), la substance chimique étant ensuite éliminée du charbon activé par lavages successifs et si nécessaire broyage à la granulométrie souhaitée. Les charbons actifs ainsi obtenus (dits chimiques) présentent une bonne porosité mais leurs caractéristiques mécaniques souvent trop faibles (grains trop friables) limitent leur mise en oeuvre pour le traitement de phases gazeuses.

Une méthode de préparation de charbon actif aggloméré consiste à mélanger un matériau hydrocarboné tel que la houille, la tourbe, le coke de tourbe ou de lignite, le charbon de bois, avec du brai ou du goudron de houille ou de bois puis agglomérer le mélange par compactage et enfin !e concasser, ou !'extruder au travers d'une filière à la granulométrie désirée. Les produits agglomérés sont ensuite dévolatilisés à une température de 400-600°C avant activation par gazéification en atmosphère oxydante (vapeur d'eau, $CO_2$, mélange $H_2O/CO_2$). Si le matériau hydrocarboné de départ est constitué de coques de fruits, par exemple coques de noix de coco, il n'est pas nécessaire de les mélanger avec du brai ou du goudron avant les étapes de dévolatilisation et d'activation car on obtient des grains dans la gamme de granulométrie souhaitée, par simple concassage, typiquement de l'ordre du mm. (Les charbons actifs préparés selon cette dernière méthode sont dits physiques). Pendant l'étape d'activation, se crée la porosité du charbon actif (avec consommation de carbone) qui va de pair avec la fragilisation du squelette des grains entraînant donc une perte notable des propriétés mécaniques (diminution de la résistance à l'écrasement, augmentation de la friabilité).

On a également proposé de préparer du charbon aggloméré en agglomérant de la poudre de charbon actif avec de l'alumine peptisée ou bien avec certaines argiles ; une fois la poudre de charbon actif mélangée avec l'alumine ou l'argile, le mélange est extrudé puis soumis à une cuisson à une température comprise entre 450 et 600 °C. Comme il est connu qu'à de telles températures le charbon actif est susceptible de se consumer au contact d'air ou de fumées oxydantes (utilisées dans les fours à chauffage direct), il est impératif de maintenir le mélange décrit ci-dessus sous atmosphère neutre, ce qui augmente le coût de cette méthode d'agglomération.

Le procédé d'agglomération de charbon actif décrit dans FR 2.228.031 consiste à mélanger une matière carbonée finement divisée (de granulométrie inférieure à 0,075 mm) avec un liant thermodurcissable à base de résine phénol/aldéhyde et/ou leurs produits de condensation et éventuellement en présence d'un agent de réticulation puis à mouler ledit mélange, à réticuler à chaud ledit liant et enfin à activer la matière carbonée ainsi agglomérée.

Dans FR 2.215.461, on a proposé d'agglomérer de la poudre de charbon actif avec un liant thermodurcissable qui peut être choisi parmi les résines phénol-formaldéhyde, résines furaniques, résines urée-formol puis à mettre le mélange en forme avant de procéder à un traitement thermique de manière à durcir le liant.

Lors de la mise en forme des agglomérats à partir de charbon actif en poudre et d'un liant (thermodurcissable, brai, goudron, etc.) selon l'art antérieur, on constate qu'une partie non négligeable du liant pénètre à l'intérieur des pores diminuant l'activité du charbon actif ainsi préparé.

Dans JP09-156.914, est décrit un procédé d'agglomération d'une poudre de charbon actif avec un liant où, préalablement à l'étape d'agglomération la poudre de charbon actif et du liant , le charbon actif est mis en contact avec un agent protecteur de pores liquide choisi parmi l'eau, les alcools supérieurs, les acides gras, les huiles et autres matières grasses liquides et les plastifiants. Les agglomérats obtenus présentent une mauvaise résistance à l'écrasement.

Le procédé d'agglomération mis au point par la demanderesse permet d'obtenir ces agglomérats de charbon actif de granulométrie comprise entre 0,2 et 10 mm, et de préférence entre 0,4 et 6 mm, possédant non seulement de bonnes propriétés mécaniques (résistance à l'écrasement, au délitage, faible friabilité) mais aussi une excellente activité adsorbante ; ce procédé présente l'avantage supplémentaire d'être de mise en oeuvre aisée et peu coûteux.

Le procédé d'agglomération de charbon actif avec un liant selon l'invention comprend les étapes suivantes :

(a) mélange de poudre de charbon actif avec un agent protecteur de pores en quantité suffisante pour que le mélange reste pulvérulent,
(b) mélange du produit issu de (a) avec un liant,
(c) agglomération et mise en forme du mélange issu de (b),
(d) durcissement des produits agglomérés.

A titre d'agent protecteur de pores, on peut utiliser des gels aqueux ou organiques. Parmi les gels aqueux, on citera tout particulièrement ceux à base d'argile smectique et notamment de bentonite ainsi que les gels à base de gélifiants organiques tels que les alginates, carraghénanes et/ou les pectines. La demanderesse pense que l'agent protecteur des pores obture tout ou partie de l'entrée des pores du charbon actif avant qu'il ne soit mis en contact avec le liant.

La poudre de charbon actif que l'on mélange avec l'agent protecteur de pores a une granulométrie moyenne en général comprise entre de 1 et 100 µm. Si l'on dispose de particules de charbon actif de granulométrie supérieure, on prendra soin de broyer ces particules de façon à ce que leur granulométrie moyenne soit de préférence comprise entre de 1 et 100 µm avant de les mélanger avec l'agent protecteur de pores.

L'étape de mélange de la poudre de charbon actif et de l'agent protecteur de pores (étape (a)) est en général menée à température ambiante. On peut utiliser tout type d'appareil de mélange connu tel que malaxeur à bras en Z, mélangeur à rubans, à meuletons. On met en oeuvre une quantité d'agent(s) protecteur(s) de pores suffisante pour que le mélange obtenu soit sous forme pulvérulente. Les proportions d'agent protecteur de pores et de poudre de charbon actif sont en général comprises entre 100 et 200 parties en poids d'agent protecteur pour 100 parties en poids de charbon actif.

Comme indiqué plus haut, le mélange issu de l'étape (a) est ensuite mélangé avec le liant (étape (b)).

Par liants au sens de la présente invention, on entend plus particulièrement les liants thermodurcissables et les liants thermofusibles.

Les liants thermodurcissables sont des compositions à base de résines thermodurcissables liquides ou solides à température ambiante, et notamment celles de type urée-formol, mélamine-urée-formol, phénol-formol, les résines de type mélamine-urée-formol étant préférées par la demanderesse ainsi que des émulsions de (co)polymères thermodurcissables sous forme de latex. Des agents de réticulation peuvent être incorporés au mélange. A titre d'exemple d'agents de réticulation, on peut citer le chlorure d'ammonium.

Les liants thermofusibles sont en général solides à température ambiante et à base de résines de type hot-melt.

A titre de liants, on peut également utiliser du brai, du goudron ou tout autre liant connu, solide à température ambiante et susceptible de ne pas se dégrader lors des différentes étapes du procédé d'agglomération de la présente invention.

En général, les proportions de liant et de poudre de charbon actif peuvent être comprises entre 4 et 30 parties en poids de liant, et de préférence entre 10 et 20 parties en poids, pour 100 parties en poids de charbon actif.

Dans le cas où un liant thermodurcissable est mis en oeuvre, il est ajouté, ainsi que l'agent de réticulation éventuel, au mélange de poudre de charbon actif et d'agent protecteur de pores en général à température ambiante (étape (b)). On peut utiliser tout type d'appareil de mélange connu tel que malaxeur à bras en Z, mélangeur à rubans, à meuletons. On peut être amené à ajouter de l'eau pour que la consistance du mélange soit telle qu'il puisse être mis directement en forme de produit aggloméré selon toute technique connue telle que filage, compactage, pastillage, laminage, granulation par assiette tournante, etc., au moyen de tout type d'appareillage connu (étape (c)). Après l'étape de mise en forme, on procède au durcissement du liant (et des produits agglomérés) par exemple par chauffage à des températures en général inférieures à 200°C (étape (d)).

Dans le cas où un liant thermofusible est mis en oeuvré, il est, après broyage éventuel, mélangé à sec avec le mélange de poudre de charbon actif et d'agent protecteur de pores (étape (b)). On chauffe alors le mélange de façon à le ramollir à la viscosité souhaitée pour sa mise en forme de grains, filés, plaquettes, etc., au moyen de tout type d'appareillage connu (étape (c)). On peut également ramollir le liant thermofusible seul puis incorporer dans la masse ramollie le charbon actif préalablement mélangé avec l'agent protecteur de pores et mettre en forme de grains, filés, plaquettes, etc. Lorsque les produits agglomérés sont refroidis à température ambiante (étape (d)), ils sont parfaitement rigides.

La présente invention a également pour objet les produits agglomérés ou agglomérats susceptibles d'être obtenus selon le procédé d'agglomération décrit ci-dessus. Selon la technique de mise en oeuvre employée, ils se présentent sous forme de grains, de filés, de pastilles, de plaquettes, de billes, etc.

Par rapport aux produits agglomérés de l'art antérieur, les agglomérats selon l'invention présentent une capacité d'adsorption améliorée et on constate par ailleurs de manière inattendue que leur résistance à l'écrasement est également améliorée.

Leur granulométrie moyenne est le plus souvent comprise entre 0,2 et 10 mm et de préférence entre 0,4 et 6 mm.

Ils présentent une résistance au délitage en milieu liquide améliorée par rapport aux grains de charbon actif agglomérés de la littérature et leur résistance à l'écrasement est comprise entre 1 et 10 kg pour des granulométries comprises entre 1 et 4 mm. Selon la nature du liant utilisé, ils peuvent résister à des températures pouvant aller jusqu'à 350 °C.

Les charbons actifs agglomérés de la présente invention peuvent être utilisés comme les charbons actifs agglomérés connus. Etant donné leurs très bonnes propriétés mécaniques et leur excellente capacité d'adsorption, ils sont particulièrement recommandés dans les procédés d'adsorption industriels de gaz sous forme de lit d'adsorbant.

Ils sont particulièrement adaptés comme agents d'adsorption de vapeurs d'hydrocarbures et notamment de vapeurs majoritairement constituées de n-butane et/ou de pentane. Les procédés industriels d'adsorption de ces vapeurs d'hydrocarbures sont appelés VRU (mis pour Volatile Recovery Unit) et sont de type PSA (adsorption modulée en pression) ou VSA (PSA sous pression réduite).

Le procédé d'agglomération de la présente invention est également adapté à toute matière pulvérulente poreuse que l'on désire agglomérer. Parmi ces matières pulvérulentes poreuses, on peut citer les poudres de silice, les poudres de zéolite ainsi que des poudres de résines thermoplastiques ou thermodurcissables telles que les particules sphéroïdales poreuses de polyamide préparées par polymérisation anionique de lactames et/ou d'aminoacides, telles que les poudres vendues par la société ELF ATOCHEM S.A. sous la dénomination commerciale Orgasol®.

Pour les poudres à base de zéolite hydrophile que l'on désire agglomérer, on prendra soin de choisir un agent protecteur à base organique.

Pour les poudres à base de résines ou de matériaux polymériques que l'on désire agglomérer, on prendra soin de choisir un liant dont la température de durcissement -s'il est thermodurcissable- ou de ramollissement -s'il est thermofusible- est inférieure à la température de fusion, de ramollissement ou de réticulation de la résine à agglomérer .

EXEMPLES

Pour les produits préparés dans les exemples ci-dessous, on mesure la densité du produit tassé, la capacité d'adsorption en butane et la résistance à l'écrasement et on pratique un test de délitage selon les procédures ci-dessous :

• Densité du produit tassé

Une éprouvette graduée de 100 ml est installée sur un appareil à tasser comprenant un socle fixe qui porte 3 galets sur lesquels repose un plateau mobile en acier muni de 3 dents de scie. Ce plateau, susceptible de se déplacer verticalement en coulissant sur un axe, reçoit un mouvement de rotation d'une vis sans fin de 60 trs/min. En tournant sur lui-même, le plateau est soumis à une série de montées suivies de chutes brusques de 4 mm de hauteur. On remplit l'éprouvette à la main en continu à l'aide du produit dont on désire mesurer la densité (préalablement placé dans une étuve portée à 150 °C jusqu'à ce que la variation de son poids soit nulle) jusqu'à atteindre la graduation "100 ml"(V) au bout de 3 min. On pèse alors le contenu de l'éprouvette (P) et calcule la densité tassé = P/V.

• Test de délitage

Dans un becher de 250 ml, on place 3 agglomérés dans 200 ml d'eau et mesure le temps nécessaire à leur désagrégation totale en agitant le mélange toutes les 30 s.

• Capacité utile en butane

Dans une étuve à 150 °C, on sèche environ 10 g de charbon actif jusqu'à ce que la variation de poids de l'échantillon soit nulle puis on le refroidit jusqu'à la température ambiante dans un dessiccateur. On remplit ensuite un tube en U muni d'un fritté n°0 et de volume de remplissage Vr compris entre 15,9 et 16,9 ml et préalablement taré (P0) avec le charbon actif étuvé et séché que l'on pèse (P1) et tasse pendant 2 min à l'aide de l'appareil à tasser utilisé pour mesurer la densité du produit tassé. On fait ensuite passer au travers de haut en bas un courant de butane dont le débit est réglé à 15 l/h pendant 45 min, la température du tube étant maintenue à 25 °C. On sèche et pèse le tube (P3).

On fait passer ensuite un courant d'azote (de haut en bas) pendant 1 sur le charbon actif maintenu à 25 °C (débit d'azote : 18 l/h). On sèche et pèse le tube (P4) et calcule

la capacité utile en butane BWC selon l'équation :

$$BWC(g/cm^3) = (P3-P4)/Vr*100$$

l'indice de butane BN selon l'équation :

$$BN(mg/g) = (P3-P1)/(P1-P0)*1.000$$

• Résistance à l'écrasement

A l'aide d'un appareil de mesure de résistance à l'écrasement de type Indelco-Chatillon (ADS/801) muni d'un support TCM 200 et d'un dynamomètre DFGS 50 dont la vitesse de descente est réglée à 23 mm/min, on mesure la charge de rupture (exprimée en kg) d'un produit aggloméré soumis à une pression croissante. La résistance mécanique à l'écrasement R est définie par la moyenne arithmétique de 25 mesures.

Exemple 1 (COMPARATIF)

On mélange 400 g de charbon actif en poudre commercialisé par la Société CECA S.A. sous la dénomination Acticarbone® CP de granulométrie moyenne 20 μm avec une solution de 80 g de résine mélamine-urée-formol vendue par la société Chemie-Linz sous la dénomination commerciale S100 dissoute dans 500 g d'eau, à l'aide d'un mélangeur Werner à bras en Z. On ajoute 8 g de chlorure d'ammonium $NH_4Cl$ (catalyseur de réticulation).
On obtient une pâte homogène qui est mise en forme de filés par extrusion à l'aide d'une presse à filer munie d'une filière percée de trous de 3 mm de diamètre.
Le durcissement du liant est obtenu par traitement thermique en étuve de 3 h à 120°C.
Les filés obtenus présentent les caractéristiques suivantes :

| Densité en lit tassé | 0,29 g/cm$^3$ |
|---|---|
| Capacité d'adsorption de butane | 8 g/100 cm$^3$ |
| Résistance à l'écrasement | 4 kg |

Exemple 2

On prépare une suspension de bentonite (vendue sous la dénomination commerciale CLARSOL® FGN/FR4 par la Société CECA S.A.) en dispersant 15 g de bentonite dans 550 g d'eau sous agitation.
La suspension ainsi obtenue est mélangée dans un malaxeur Werner à bras Z à 400 g de charbon actif Acticarbone® CP.
Lorsque le mélange est homogène, on introduit 80 g de résine mélamine-urée-formol S100 ainsi que 8 g de $NH_4Cl$.
On ajoute de la carboxy méthylcellulose comme adjuvant de filage.
Lorsque la pâte est homogène on file, à l'aide d'une presse à meuletons KAHL équipée d'une filière de diamètre 3 mm, puis on traite thermiquement pendant 3 heures dans une étuve à 120°C.
Les filés obtenus ont une capacité d'adsorption de butane de 8,4, une résistance à l'écrasement de 5,9 kg, une densité de 0,32.

Exemple 3 (COMPARATIF)

On procède comme dans l'exemple précédent mais en utilisant de l'eau à la place de la suspension de bentonite comme agent protecteur de pores.
Les filés obtenus ont une capacité d'adsorption de butane de 8,1, une résistance à l'écrasement de 5 kg une densité de 0,30.

Exemple 4 (COMPARATIF)

Le mélange est effectué comme dans l'exemple 3 mais le filage est opéré avec une filière de 2 mm.
Après un traitement thermique de 4 h à 120°C, on obtient des filés qui ont une capacité d'adsorption de butane de 8,5, une résistance à l'écrasement de 2,6 kg une densité de 0,31.

Exemple 5

On opère comme dans l'exemple précédent mais en remplaçant l'eau (agent de protecteur de pores) par la suspension de bentonite de l'exemple 2.

On obtient ainsi des filés ayant une capacité d'adsorption de 8,9, une résistance à l'écrasement de 4,6 kg une densité de 0,32.

Les exemples 2 et 3 d'une part, 4 et 5 d'autre part, mettent en évidence l'amélioration apportée par l'utilisation de bentonite sur la capacité d'adsorption et la résistance à l'écrasement.

Exemple 6

On prépare une suspension de 12,5 kg de bentonite CLARSOL FGN/FR4 dans 255 litres d'eau.

Dans un mélangeur à rubans de marque GONDARD, on humidifie 300 kg de charbon actif Acticarbone CP avec 240 litres d'eau puis on ajoute la suspension de bentonite ; après 10 minutes de mélange, on introduit 25 kg de résine mélamine-urée-formol S100, puis 25 litres d'une solution de chlorure d'ammonium à 10 % en poids et enfin l'adjuvant de filage (carboxyméthylcellulose).

Après 10 minutes de mélange, on file en 3 mm à l'aide d'une extrudeuse HOBART®.

Le traitement thermique est effectué dans un four rotatif horizontal de longueur 8 m, de diamètre 1 m, avec une vitesse de rotation 2 trs/min et température d'entrée des gaz chauds de 450 à 550°C. L'évaporation de l'eau contenue dans le produit limite sa température à 130-150 °C.

On obtient des filés dont la capacité d'adsorption de butane est de 9, la résistance à l'écrasement 4 kg et la densité 0,36.

Exemple 7

On mélange 400 g de charbon actif Acticarbone® CP avec une suspension de 15 g de bentonite dans 550 g d'eau puis on ajoute 40 g de résine mélamine urée-formol S100 et 4 g de chlorure d'ammonium ainsi qu'un adjuvant de filage.

On file à l'aide d'une presse Pinette-Emidecau à piston, munie d'une filière de 3 mm.

Après traitement thermique de 4 heures à 120°C, on obtient des filés qui ont une capacité d'adsorption de 9,4, une résistance à l'écrasement de 5 kg et dont la densité est de 0,31.

Exemple 8

On opère comme dans l'exemple précédent mais avec seulement 24 g de résine mélamine-urée-formol et 2,5 g de chlorure d'ammonium.

Le produit obtenu a une capacité d'adsorption de butane de 10,7, une résistance à l'écrasement de 4,5 kg, une densité de 0,30.

Exemple 9

On prépare un mélange comme décrit dans l'exemple 2 ; lorsque la pâte est homogène elle est progressivement versée dans une assiette de granulation permettant l'agglomération sous forme de billes.

L'appareil utilisé ici, de marque EIRICH®, a un diamètre de 0,4 m et sa vitesse de rotation et son inclinaison sont réglées pour permettre la formation de billes de 1,5 à 3 mm de diamètre ; après traitement thermique, ces billes ont une capacité d'adsorption de 9,5, une résistance à l'écrasement variant de 0,5 à 1 kg suivant leur diamètre.

Exemple 10

On mélange 850 g de charbon actif Acticarbone® CP avec une suspension aqueuse de 30 g/l de bentonite ; au mélange pulvérulent obtenu, on ajoute 150 g (exprimés en matière sèche) d'une émulsion à base d'esters acryliques copolymérisés vendue sous la dénomination commerciale REPOLEM 1103 K par la Société ELF ATOCHEM S.A. ; on file en 3 mm avec une presse à filer à piston à 150°C et sèche en étuve pour éliminer l'eau résiduaire.

On obtient un produit dont la capacité d'adsorption de butane est de 8,7.

Exemple 11

La formulation précédente est compactée 5 minutes à 175°C sous 150 bars dans une presse à piston. Le bloc obtenu est ensuite concassé à froid et tamisé pour obtenir une fraction dont la granulométrie est comprise entre 0,5 et 2 mm.

Ce produit concassé tamisé a une capacité d'adsorption de butane de 8,7 .

Exemple 12

La formulation de l'exemple 11 est compactée sous 1 000 bars à 150°C.

La fraction 0,5/2 mm obtenue après concassage et tamisage du bloc comprimé a une capacité d'adsorption de butane de 10.

Tous les produits agglomérés préparés selon les exemples 1 à 12 sont soumis au test de délitage à l'eau : aucun des produits des exemples 2 à 12 ne se désagrège alors que l'échantillon de l'exemple comparatif 1 s'est délité.

Exemple 13

On mesure la capacité d'adsorption de 3 charbons actifs pour le n-butane :

a/ le charbon actif aggloméré de l'exemple 6

b/ SA 1810 est un charbon actif sous forme de granulés de 1 mm de diamètre moyen préparé à partir de bois de pin activé chimiquement (BWC : 10,5 ; densité : 0,22g/ml ; BN : 514)

c/ GAC 4×8 est un aggloméré de charbon actif sous forme de granulés de diamètre moyen 3,3 mm préparé à partir de houille et activé physiquement (BWC : 5,8 ; densité : 0,43g/ml ; BN : 242)

On procède selon un procédé de type VSA (adsorption modulée en pression) avec adsorption à pression atmosphérique et désorption sous vide.

L'adsorbeur est une colonne de 1,5 m de hauteur et de 5 cm de diamètre dans laquelle sont chargés 3l d'un des 3 charbons actifs décrits ci-dessus.

On enchaîne cycliquement adsorption et désorption selon les conditions énoncées ci-dessous :

adsorption     sens de passage des gaz dans la colonne : de bas en haut durée 15 min
               pression des gaz 0,1 MPa
               température des gaz 25 °C
               composition des gaz : 40 parties en volume de n-butane et 100 parties en volume d'azote
               vitesse des gaz 0,02 m/s
désorption     sens de passage des gaz dans la colonne : de haut en bas durée 15 min
               pression des gaz 0,01 MPa
               température des gaz 25 °C
               composition des gaz (gaz de purge) azote pur
               débit gazeux total (gaz de purge) 4Nl/h

On mesure le nombre de cycles adsorption/désorption nécessaire pour que le front gazeux de butane sorte de la colonne . Les résultats sont réunis dans le tableau 1.

tableau 1

| Type d'aggloméré | a | b | c |
|---|---|---|---|
| Nombre de cycles nécessaire à la percée du front | pas de percée au 80e cycle | pas de percée au 80e cycle | 35 cycles |
| Masse de butane récupérée (g) | 3.867 | 3.867 | 1.692 |

Exemple 14

On reprend les conditions opératoires de l'exemple 13 à l'exception

\*     de la pression de désorption qui est fixée à 0,02 MPa.

On mesure combien de cycles adsorption/désorption sont nécessaires pour que le front gazeux de butane sorte de la colonne . Les résultats sont réunis dans le tableau 2.

tableau 2

| Type d'aggloméré | a | b | c |
|---|---|---|---|
| N° du cycle où a lieu la percée du front | 24e cycle | 14e cycle | 12e cycle |
| Volume de butane récupéré (l) | 480 | 280 | 240 |
| Masse de butane récupérée (g) | 1.160 | 677 | 580 |

Exemple 15

On reprend les conditions opératoires de l'exemple 13 à l'exception

* de la vitesse des gaz lors de l'adsorption : 0,03 m/s
* et du débit de purge pendant les phases de désorption : 6Nl/h.

On mesure combien de cycles adsorption/désorption sont nécessaires pour que le front gazeux de butane sorte de la colonne. Les résultats sont réunis dans le tableau 3.

tableau 3

| Type d'aggloméré | a | b | c |
|---|---|---|---|
| N° du cycle où a lieu la percée du front | 28e cycle | 24e cycle | 9e cycle |
| Volume de butane récupéré (l) | 1.176 | 1.050 | 378 |
| Masse de butane récupérée (g) | 2.842 | 2.537 | 913 |

**Revendications**

1. Procédé de préparation d'agglomérats de charbon actif comprenant

   (b) le mélange d'une poudre de charbon actif avec un liant et éventuellement un agent de réticulation,
   (c) l'agglomération et la mise en forme dudit mélange et
   (d) le durcissement des produit agglomérés,

   **caractérisé en ce que** préalablement à l'étape (b), la poudre de charbon actif est mise en contact avec un agent protecteur de pores choisi parmi les gels aqueux ou organiques, en quantité suffisante pour que ledit mélange reste sous forme pulvérulente (étape (a)).

2. Procédé selon la revendication 1, **caractérisé en ce que** les proportions d'agent protecteur de pores et de poudre de charbon actif sont comprises entre 100 et 200 parties en poids d'agent protecteur pour 100 parties en poids de charbon actif.

3. Procédé selon la revendication 1 ou 2, **caractérisé en ce que** les proportions de liant et de poudre de charbon actif sont comprises entre 4 et 30 parties en poids de liant, et de préférence entre 10 et 20 parties en poids, pour 100 parties en poids de charbon actif.

4. Procédé selon l'une quelconque des revendications 1 à 3, **caractérisé en ce que** le mélange de la poudre de charbon actif et de l'agent protecteur de pores et son mélange avec le liant et éventuellement l'agent de réticulation sont effectués à température ambiante.

5. Procédé de préparation d'agglomérats de charbon actif et de liant selon l'une des revendications 1 à 4, **caractérisé en ce qu'**on procède à la mise en forme de produit aggloméré par filage, compactage, pastillage, laminage, granulation par assiette tournante.

6. Procédé de préparation d'agglomérats de charbon actif et de liant thermodurcissable selon l'une des revendications 1 à 5, **caractérisé en ce qu'**on procède au durcissement du produit aggloméré par chauffage à une température suffisante pour assurer le durcissement du liant.

**7.** Procédé de préparation d'agglomérats de charbon actif et de liant thermofusible selon l'une des revendications 1 à 5, **caractérisé en ce que** le liant thermofusible en poudre est :

soit mélangé avec la poudre de charbon actif préalablement mélangée avec l'agent protecteur de pores puis l'ensemble est chauffé et ramolli puis mis en forme et refroidi
soit chauffé et ramolli avant d'être mélangé avec la poudre de charbon actif préalablement mélangée avec l'agent protecteur de pores puis l'ensemble est mis en forme et refroidi.

**8.** Agglomérats susceptibles d'être obtenus selon le procédé tel que défini dans l'une quelconque des revendications 1 à 7.

**9.** Agglomérats selon la revendication 8, caractérisés en ce l'agent protecteur de pores est à base d'argile smectique telle que la bentonite ou à base de gélifiants organiques tels que les alginates, carraghénanes et/ou les pectines.

**10.** Agglomérats selon la revendication 8 ou 9, **caractérisés en ce que** le liant est à base de résines thermodurcissables liquides ou solides à température ambiante ou à base d'émulsion ou de latex de (co)polymère(s), de préférence à base de résines de type urée-formol, mélamine-urée-formol et/ou phénol-formol, et avantageusement à base de résines de type mélamine-urée-formol.

**11.** Agglomérats selon la revendication 8 ou 9, **caractérisés en ce que** le liant est à base de résines thermofusibles de type hot-melt solides à température ambiante, de brai ou de goudron.

**12.** Utilisation des agglomérats tels que définis à l'une quelconque des revendications 8 à 11 comme agents d'adsorption.

**13.** Utilisation des agglomérats selon la revendication 12 pour la séparation et/ou l'épuration de gaz.

**14.** Utilisation des agglomérats selon la revendication 12 pour la décoloration, l'épuration et/ou la désodorisation de liquides.

**15.** Utilisation des agglomérats selon la revendication 13 sous forme de lit d'adsorbant, dans un procédé d'adsorption industriel de gaz.

**16.** Utilisation des agglomérats selon la revendication 15 pour l'adsorption de vapeurs d'hydrocarbures majoritairement constituées de n-butane et/ou de pentane (VRU).

**17.** Procédé d'agglomération de matière pulvérulente poreuse selon l'une quelconque des revendications 1 à 7, **caractérisé en ce que** la poudre de charbon actif est remplacée par ladite matière pulvérulente poreuse, la matière ainsi agglomérée étant poreuse

**18.** Agglomérats susceptibles d'être obtenus selon le procédé de la revendication 17.

**Claims**

**1.** Process for the preparation of active charcoal agglomerates comprising

(b) mixing an active charcoal powder with a binder and optionally a crosslinking agent,
(c) agglomerating and shaping the said mixture and
(d) curing the agglomerated products,

**characterized in that**, prior to the stage (b), the active charcoal powder is brought into contact with a pore-protecting agent chosen from aqueous or organic gels, in a sufficient amount for the said mixture to remain in the pulverulent form (stage (a)).

**2.** Process according to Claim 1, **characterized in that** the proportions of pore-protecting agent and of active charcoal powder are between 100 and 200 parts by weight of protecting agent per 100 parts by weight of active charcoal.

3.  Process according to Claim 1 or 2, **characterized in that** the proportions of binder and of active charcoal powder are between 4 and 30 parts by weight of binder, preferably between 10 and 20 parts by weight, per 100 parts by weight of active charcoal.

4.  Process according to any one of Claims 1 to 3, **characterized in that** the mixing of the active charcoal powder and of the pore-protecting agent and its mixing with the binder and optionally the crosslinking agent are carried out at ambient temperature.

5.  Process for the preparation of agglomerates of active charcoal and of binder according to one of Claims 1 to 4, **characterized in that** the shaping of agglomerated product is carried out by extruding, compacting, pelleting, rolling or granulating with a rotating pan.

6.  Process for the preparation of agglomerates of active charcoal and of thermosetting binder according to one of Claims 1 to 5, **characterized in that** the agglomerated product is cured by heating at a temperature sufficient to provide for the curing of the binder.

7.  Process for the preparation of agglomerates of active charcoal and of hot-melt binder according to one of Claims 1 to 5, **characterized in that** the powdered hot-melt binder is:

    either mixed with the active charcoal powder, which has been mixed beforehand with the pore-protecting agent, and then the combined mixture is heated and softened and then shaped and cooled
    or heated and softened before being mixed with the active charcoal powder, which has been mixed beforehand with the pore-protecting agent, and then the combined mixture is shaped and cooled.

8.  Agglomerates which can be obtained according to the process as defined in any one of Claims 1 to 7.

9.  Agglomerates according to Claim 8, **characterized in that** the pore-protecting agent is based on smectic clay, such as bentonite, or based on organic gelling agents, such as alginates, carrageenans and/or pectins.

10. Agglomerates according to Claim 8 or 9, **characterized in that** the binder is based on thermosetting resins which are liquid or solid at ambient temperature or based on emulsions or latices of (co)polymer(s), preferably based on resins of ureaformaldehyde, melamine-urea-formaldehyde and/or phenolformaldehyde type, advantageously based on resins of melamine-urea-formaldehyde type.

11. Agglomerates according to Claim 8 or 9, **characterized in that** the binder is based on hot-melt resins of hot-melt type which are solid at ambient temperature, on pitch or on tar.

12. Use of the agglomerates as defined in any one of Claims 8 to 11 as adsorption agents.

13. Use of the agglomerates according to Claim 12 for the separation and/or purification of gases.

14. Use of the agglomerates according to Claim 12 for the decoloration, purification and/or deodorization of liquids.

15. Use of the agglomerates according to Claim 13 in the form of an adsorbent bed in an industrial process for the adsorption of gases.

16. Use of the agglomerates according to Claim 15 for the adsorption of hydrocarbon vapours composed mainly of n-butane and/or of pentane (VRU).

17. Process for the agglomeration of porous pulverulent material according to any one of Claims 1 to 7, **characterized in that** the active charcoal powder is replaced by the said porous pulverulent material, the material thus agglomerated being porous.

18. Agglomerates which can be obtained according to the process of Claim 17.

**Patentansprüche**

1. Verfahren zur Herstellung von Agglomeraten von Aktivkohle, das umfasst:

    (b) Mischen eines Aktivkohlepulvers mit einem Bindemittel und ggf. einem Vernetzungsmittel,
    (c) Agglomerieren und Formen des Gemisches und,
    (d) Härten der agglomerierten Produkte,

    **dadurch gekennzeichnet, dass** vor Schritt (b) das Aktivkohlepulver mit einem Porenschutzmittel, das unter den wässrigen oder organischen Gelen ausgewählt ist, in einer solchen Menge in Kontakt gebracht wird, dass das Gemisch weiterhin in Pulverform vorliegt (Schritt (a)).

2. Verfahren nach Anspruch 1, **dadurch gekennzeichnet, dass** die Mengenanteile des Porenschutzmittels und des Aktivkohlepulvers im Bereich von 100 bis 200 Gewichtsteile Schutzmittel auf 100 Gewichtsteile Aktivkohle liegen.

3. Verfahren nach Anspruch 1 oder 2, **dadurch gekennzeichnet, dass** die Mengenanteile des Bindemittels und des Aktivkohlepulvers im Bereich von 4 bis 30 Gewichtsteile Bindemittel und vorzugsweise 10 bis 20 Gewichtsteile Bindemittel auf 100 Gewichtsteile Aktivkohle liegen.

4. Verfahren nach einem der Ansprüche 1 bis 3, **dadurch gekennzeichnet, dass** das Mischen des Aktivkohlepulvers und des Porenschutzmittels und das Mischen mit dem Bindemittel und ggf. dem Vernetzungsmittel bei Raumtemperatur erfolgt.

5. Verfahren zur Herstellung von Agglomeraten von Aktivkohle und Bindemittel nach einem der Ansprüche 1 bis 4, **dadurch gekennzeichnet, dass** die Formgebung des agglomerierten Produkts durch Strangpressen, Verdichten, Tablettieren, Walzen oder Granulieren am Granulierteller durchgeführt wird.

6. Verfahren zum Herstellung von Agglomeraten von Aktivkohle und einem wärmehärtbaren Bindemittel nach einem der Ansprüche 1 bis 5, **dadurch gekennzeichnet, dass** das Härten des agglomerierten Produkts durch Erwärmen auf eine Temperatur erfolgt, die ausreichend ist, um das Härten des Bindemittels sicherzustellen.

7. Verfahren zur Herstellung von Agglomeraten von Aktivkohle und einem schmelzenden Bindemittel nach einem der Ansprüche 1 bis 5, **dadurch gekennzeichnet, dass** das schmelzende Bindemittel in Pulverform:

    - entweder mit dem zuvor mit dem Porenschutzmittel vermischten Aktivkohlepulver vermischt und anschließend das ganze Gemisch erwärmt und weichgemacht und dann geformt und abgekühlt wird,
    - oder vor dem Mischen mit dem zuvor mit dem Porenschutzmittel vermischten Aktivkohlepulver erwärmt und weichgemacht wird und dann das ganze geformt und abgekühlt wird.

8. Agglomerate, die nach dem Verfahren nach einem der Ansprüche 1 bis 7 erhältlich sind.

9. Agglomerate nach Anspruch 8, **dadurch gekennzeichnet, dass** das Porenschutzmittel auf smektischen Tonen, wie Bentonit, oder organischen Gelbildnern, wie Alginaten, Carrageenanen und/oder Pektinen basiert.

10. Agglomerate nach Anspruch 8 oder 9, **dadurch gekennzeichnet, dass** das Bindemittel auf bei Raumtemperatur flüssigen oder festen, wärmehärtbaren Harzen oder Emulsionen oder Latices eines oder mehrerer Copolymere und vorzugsweise Harzen vom Harnstoff-Formaldehyd-Typ, Melamin-Harnstoff-Formaldehyd-Typ und/oder Phenol-Formaldehyd-Typ und vorteilhaft auf Harzen vom Melamin-Harnstoff-Formaldehyd-Typ basiert.

11. Agglomerate nach Anspruch 8 oder 9, **dadurch gekennzeichnet, dass** das Bindemittel auf bei Raumtemperatur festen, schmelzenden Harzen vom Typ Hotmelt, Pech oder Teer basiert.

12. Verwendung von Agglomeraten nach einem der Ansprüche 8 bis 11 als Adsorbentien.

13. Verwendung von Agglomeraten nach Anspruch 12 zur Trennung und/oder Reinigung von Gasen.

14. Verwendung von Agglomeraten nach Anspruch 12, um Flüssigkeiten zu entfärben, zu reinigen und/oder zu desodorisieren.

**15.** Verwendung von Agglomeraten nach Anspruch 13 in Form von Adsorbensbetten in industriellen Gasadsorptionsverfahren.

**16.** Verwendung von Agglomeraten nach Anspruch 15 zur Adsorption von Kohlenwasserstoffdämpfen, die hauptsächlich aus n-Butan und/oder Pentan bestehen (VRU).

**17.** Verfahren zur Agglomeration von porösen pulverförmigen Substanzen nach einem der Ansprüche 1 bis 7, **dadurch gekennzeichnet, dass** das Aktivkohlepulver durch das poröse pulverförmige Material ersetzt wird, wobei das auf diese Weise agglomerierte Material porös ist.

**18.** Agglomerate, die nach dem Verfahren nach Anspruch 17 erhältlich sind.